# EUROPEAN PATENT SPECIFICATION

(11) **EP 0 484 093 B1**
(45) Date of publication and mention of the grant of the patent: **13.03.1996**
(21) Application number: 91309966.9
(22) Date of filing: 29.10.1991
(51) Int. Cl.: C09J 7/00, C08L 51/06, C08L 23/08, C08F 8/00

(54) **Polymer composition for forming release films**
Polymerzusammensetzung zur Herstellung einer Trennfolie
Composition polymère pour la fabrication d'un film détachable

(30) Priority: 29.10.1990 FI 905345
(43) Date of publication of application: 06.05.1992
(73) Proprietor: NESTE OY, FIN-02150 Espoo (FI); OY KWH PLAST AB, SF-68600 Pietarsaari (FI)
(72) Inventor: Bergstrom, Christer, SF-02170 Espoo (FI); Jafs, Ake, SF-68600 Pietersaari (FI); Jakobsson, Stefan, SF-68620 Pietersaari (FI); Seppa, Inari, SF-06100 Porvoo (FI); Markkula, Marja-Leena, SF-01100 Ostersundom (FI)
(74) Representative: Lamb, John Baxter

(56) References cited:
- EP-A- 0 254 050
- EP-A- 0 334 051
- US-A- 3 050 411
- US-A- 4 472 480
- DATABASE WPIL Derwent Publications Ltd., London, GB; AN 85-163003

## Description

The invention relates to a polymer composition from which release films can be prepared for contact with surfaces containing pressure-sensitive adhesives.

Release covers are used in labels, floor slabs, wallpapers, plasters, stickers, etc. Release covers are traditionally made of kraft paper, which is coated with silicone. A silicone polymer and a catalyst are spread on the base material and the final polymerization occurs by heating and/or irradiation. The silicone coating is to be cross-linked as a uniform surface and anchored to the subweb.

A low tensile strength, a varying thickness and an uneven surface place limitations, which have become important as the processing speeds and automatic label applications have increased.

Precoated release papers, which are papers coated with polyolefins on one or both sides, have solved part of the above-mentioned problems. In this case, the paper is first coated with a polyolefin and thereafter with silicone, i.e. two separate coating steps are needed, as described in the US publication 3 403 045. In addition, the silicone treatment requires a catalyst.

In the release films are used also polyester films, most often polyethylene terephthalate, which are coated with a silicone polymer. According to the US publication 453 366, the film is treated by irradiating it in an inert atmosphere before spreading the silicone. In any case, polyester films can also be coated without irradiation (FI 893868), when a certain polydiorganosiloxane is used.

In the US patent 4 859 511 is described a release film, the base of which can be a paper, nonwoven, a plastic film or an extrusion coated paper and which is precoated before spreading the release substance. The precoating material is polar, e.g. polybutadiene or polyisoprene. The silicone coating is spread after the precoating and dried or hardened depending on the properties of the silicone.

In the EP publication 252 483 is described a fluorosilica polymer, which can be used as a release substance on various base materials, such as paper, various plastic films and metals. The release substance is spread on the base material and hardened. JP-A-60-094485 discloses a release coating composition derived from reaction of a polysiloxane with a polyisocyanate and a hydroxyalkyl acrylate. EP-A-0254050 discloses a release coating made of a polyethylene/vinylsiloxane mixture. EP-A-0334051 discloses a release coating made by co-extrusion of a polypropylene and a difunctional silicone.

Also polyolefin films can thus be used in release films. However, the siliconization has to be performed as a separate processing step and irradiation and/or heating is needed for fixing the silicone. The temperature is relatively high, generally about 150°C, and the properties of the polyolefin deteriorate.

The present invention solves the problems related to known release films in a very simple manner. Instead of using a separate base material, which is coated with a release substance, such as silicone, the invention provides a polymer composition which as such acts as a release substance and whose treatment properties correspond to the treatment properties of LDPE, and it can thus be formed directly as a release film by means of a conventional film preparation technique.

According to the invention there is provided a polymer for forming release films for contact with surfaces containing pressure-sensitive adhesives, characterized in that it is formed of a polyolefin to which compounds containing functional groups have been joined by copolymerizing, or grafting in another way than by means of said functional groups, said functional groups being acid or acid anhydride, silane, hydroxy, epoxy, amino, ketene or isocyanate groups, and a reactive release substance that is silicone, fatty acid compound or fluoropolymer containing functional groups, which polyolefin and release substance have been compounded in a molten state.

The polymer composition developed for the preparation of a release film is comprised of a reactive polyolefin and a reactive silicone or some other reactive release substance, and these are caused to react with each other by compounding in a molten state. In this way, it is possible to make the silicone or some other release substance chain join to the polyolefine chain.

The reactive polyolefine can be any polyolefine, to which a reactive organic compound is joined by copolymerization, gafting or some other means by joining to the chain. Organic compounds suitable for this purpose may be such compounds, which contain acid or acid anhydride, silane, hydroxyl, amino, epoxy, cetene, or any other groups, which react with reactive silicones or other release substances.

Suitable polyolefines, which can be applied to the inventive reactive polymer, include copolymers of ethylene and carboxyl acids or carboxyl acid derivatives, such as ethylene-acrylic acid and ethylene-metacrylic acid copolymers, ethylene-butyl acrylate, ethylene-ethyl acrylate, ethylene-methyl acrylate, ethylene-hydroxyethyl metacrylate and ethylene-glycidyl metacrylate. Suitable are also copolymers of ethylene and vinyl alcohol as well as copolymers of ethylene and hydrolyzable silanes, such as ethylene-vinyl trimetoxy silane copolymers. The ethylene copolymers may also be grafted with acids or acid anhydride, e.g. carboxyl acids. Examples of these include ethylene-butyl acrylate copolymers grafted with carboxyl acids.

Reactive release substances are in turn such silicones or other substances, which contain acid or acid anhydride, ketene, epoxy, hydroxy (silanol or carbinol), amino or hydrogen groups, which are bound thereto, or any reactive groups, which can react with reactive polyolefines. These groups can be located at the ends of the chains (primary groups) or as side groups (secondary groups). Also unsaturated groups are possible, since they can be grafted to polyolefines, or silicones or other release substances can be caused to remain in the polyolefine by means of long paraffinic groups without a chemical reaction.

By admixing said reactive polyolefines and reactive release substances in a molten state, a release polymer is obtained, which is a reactive compound and which can be delivered to film manufacturers in a granulated form. The compounding can be performed with a Bambury mixer, a continuos mixer, a two-screw compounding device or any compounding device, whose temperature and delay time are sufficient for causing the reactive components to fully react with each other. In certain cases, the reactive compounding can also be performed in connection with the film preparation. A release film is a film (monofilm, co-extruded film, laminated film or (co)extrusion coated web), whose surface layer is a release compound. The film can also be prepared by means of a blown-film, cast-film or extrusion coating technique, whereby the subweb can be paper, aluminium, plastic or any other subweb suitable for extrusion coating.

In the inventive reactive polymer, the quantity of the reactive release substance can vary within the range 0.1-20% by weight, although the suitable quantity can generally be selected within the range 1-10% by weight. In connection with higher release- substance contents, the reaction compound becomes too cross-linked.

The tape, with which said release film is used, can be rubber- or acrylate-based or any tape, which is used for technical applications (e.g. as a backing film for emery paper, in which case the tape has to adhere to steel), for packing purposes (e.g. as a backing film for labels, in which case the tape has to adhere to glass, PVC, PET, etc.) and for hospital purposes (e.g. as a backing film for EKG-electrodes, in which case the tape has to adhere to skin).

Various non-limiting examples have been given below for illustrating the invention, which, with respect to release/adhesion properties, have been tested as follows:

The release compounds were made with a Bambury mixer (200°C, 10 min) and pressed into sheets with a thickness of 2 mm. Rubber-based standard testing tape (Beyersdorf's TESA4154) was pressed onto these sheets such that the pressure was 70 g/cm, time 20 h and temperature 23°C. The adhesion (release force) between the release-compound sheets and the tape was tested with the Instron pulling device, when the pulling speed was 300 mm/min (180° peel test) and the release value was given in N/cm. For PVC and PET in the same way as above. The readhesion was measured in the same way as the release value.

The following reactive polyolefine grades were used:

| | |
|---|---|
| NCPE0414 | Acid-grafted 17% ethylene-butyl acrylate |
| NCPE6664 | Ethylene-vinyl trimetoxy silane (2%) copolymer |
| NCPE0465, Neste | Ethylene-hydroxyethyl metacrylate (8%) copolymer |
| Primacor 3340, Dow | Ethylene-acrylic acid (9%) copolymer |

The following reactive release substances were used:

| | |
|---|---|
| L-9300, Union Carbide | Silicone containing glycidyl groups |
| DC-109, Dow Corning | Silicone containing hydroxyl groups (primary silanol) |
| MH-15, Bayer | Polymethyl hydrogen siloxane based silicone |
| Reoplast 39, Ciba-Geigy | Epoxidized soybean oil |
| AKD, Raisio | Alkyl cetene dimer |
| SLM 52-173, Wacker Chemie | Silicone containing silanol groups |
| FD 350, Wacker Chemie | Silicone containing silanol groups |
| FD 80, Wacker Chemie | Silicone containing silanol groups |

### Example 1

Various release substances were melt-mixed with a reactive ethy-lene-silane copolymer (NCPE6664). The results are given in Table 1.

**Table 1**

| Release substance | Adhesion of compound to tape (N/cm) | Adhesion of tape to glass |
|---|---|---|
| 3% L9300 | 0.63 | 1.9 |
| 3% DC-109 | 0.72 | 1.7 |
| 3% DC-109 + 0.1% DBTDL | 0.53 | 2.0 |
| 3% MH-15 | 0.62 | 1.5 |
| None | 1.4 | 1.9 |

Table 1 shows that by adding reactive release substances the tape can be easily loosened and that also relatively good adhesion results to glass are obtained.

An advantageous combination is obtained when using DC-109, and the results further improve when the condensation catalyst DBTDL of silanols (dibutyl tin dilaureate) is used.

### Example 2

Ethylene-hydroxyethyl metacrylate copolymer-based (test grade NTR-354) mixtures and these deviate from the above in that the quantity of reactive groups is very large, owing to which reactive release substances can be added considerably more and possibly diluted subsequently e.g. with HDPE.

**Table 2**

| Release substance | Compound adhesion to tape | Adhesion of tape to base | | | (N/cm) |
|---|---|---|---|---|---|
| | | Steel | Glass | PVC | PET |
| 6% L-9300 | 0.31 | 1.6 | 1.2 | 1.6 | 1.1 |
| 6% MH-15 | 0.42 | 1.2 | 1.7 | 1.3 | 1.6 |
| 6% Reoplast 39 | 0.41 | 1.5 | 1.9 | 1.5 | 1.3 |
| 6% AKD | 0.20 | 1.8 | 2.0 | 1.6 | 1.4 |
| 6% AKD + 50:50 dilution with HDPE | 0.21 | 2.6 | 2.3 | 2.0 | 1.8 |
| None | 1.6 | 1.7 | 1.8 | 1.1 | 1.0 |

Table 2 shows that large quantities of reactive release substances can be easily joined to the hydroxy group without that the adhesion properties of the tape deteriorate, and in addition, these mixtures can be diluted maintaining the release properties.

### Example 3

The effect of the viscosity of the release subtance on the release force was examined. In all three silicones used, the reactive part was silanol. However, the viscosities deviated considerably from each other.

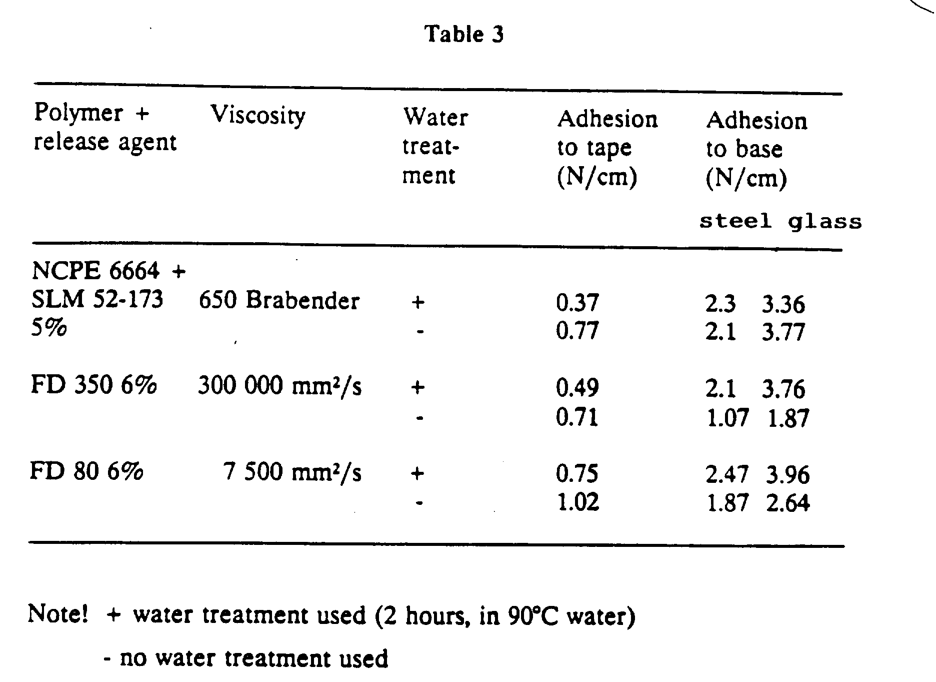

SLM 52-173, which has the highest polymerization degree (viscosity), produces the best release properties. The release properties improve as the viscosity of the release substance increases.

Table 3 also shows that the release properties can be improved further by means of the water treatment.

### Example 4

Finally, a 3-layer film was made with the blown-film technique, the structure of which film was:

15 µm EBA/10 µm HDPE/15 µm release mixture.

EBA was Neste's grade NCPE6417 containing 17% of butyl acrylate, and HDPE was NCPE7007. The idea was that the layer thickness of the release mixture would be as small as possible so that the product would be cheap and the migration would be less detrimental. EBA was used as the second outer layer to make the unreacted release substance absorb into it. The HDPE middle layer in turn gives the product stiffness, which improves the release properties.

Table 4 shows the results of two 3-layer films.

**Table 4**

| Polymer + release substance | Adhesion to tape (N/cm) | Adhesion to base (N/cm) | | | |
|---|---|---|---|---|---|
| | | Steel | Glass | PVC | PET |
| NCPE6664 + 6% DC-109 | 0.68 | 0.74 | 1.7 | 1.1 | 0.62 |
| Primacor 3440 + 6% DC-109 | 1.0 | 0.56 | 1.7 | 1.4 | 0.33 |

The results show that also coextruded films have release properties and after the loosening the tape adheres well especially to glass.

## Claims

1. A polymer composition for forming release films for contact with surfaces containing pressure-sensitive adhesives, characterized in that it is formed of a polyolefin, to which compounds containing functional groups have been joined by copolymerizing, or grafting in another way than by means of said functional groups, said functional groups being acid or acid anhydride, silane, hydroxy, epoxy, amino, ketene or isocyanate groups, and a reactive release substance that is silicone, fatty acid compound or fluoropolymer containing functional groups, which polyolefin and release substance have been compounded in a molten state.

2. A polymer composition according claim 1, characterized in that said polyolefin is a copolymer or graft polymer of ethylene.

3. A polymer composition according to claim 1, characterized in that the functional groups of the release substance are silanol, carbinol, alkoxysilane, acid, amino, epoxy, hydrogen silane, ketene or isocyanate groups.

4. A polymer composition according to claim 1, characterized in that the reaction has been achieved by condensation of silanol groups by means of water and a silanol condensation catalyst.

5. A polymer composition to claim 4, characterized in that the polyolefin is an ethylenealkoxysilane co- or terpolymer and the release substance is a silicone containing silanol groups.

6. A polymer composition according to claim 4, characterized in that the polyolefin is an ethylenehydroxyalkyl-(meth)acrylate co- or terpolymer and the release substance is a release substance containing ketene groups.

7. A release film for contact with surfaces containing pressure-sensitive adhesives, characterized in that it contains a polymer composition according to claims 1-6 in the form of a film.

8. A release film according to claim 7, characterized in that it comprises a mixture of said polymer composition and an unmodified polyolefin.

9. A release film according to claim 7, characterized in that it comprises a polymer composition according to claims 1-6 coextruded on the surface of a film material not containing said polymer composition.

## Patentansprüche

1. Polymerzusammensetzung zur Herstellung von Trennfolien für den Kontakt mit Oberflächen, die selbstklebende Klebstoffe enthalten. dadurch gekennzeichnet, daß die Polymerzusammensetzung aus einem Polyolefin, mit dem Verbindungen, die funktionelle Gruppen enthalten, durch Copolymerisation oder Pfropfpolymerisation auf andere Weise als mittels der funktionellen Gruppen verbunden worden sind, wobei die funktionellen Gruppen eine Säure oder ein Säureanhydrid, Silan-, Hydroxy-, Epoxy-. Amino-, Keten- oder Isocyanatgruppen sind, und einer reaktiven Trennsubstanz hergestellt wird, die ein Silikon, eine Fettsäureverbindung oder ein Fluorpolymer mit funktionellen Gruppen ist, wobei das Polyolefin und die Trennsubstanz in schmelzflüssigem Zustand miteinander vermischt worden sind.

2. Polymerzusammensetzung nach Anspruch 1, dadurch gekennzeichnet, daß das Polyolefin ein Copolymer oder Propfpolymer von Ethylen ist.

3. Polymerzusammensetzung nach Anspruch 1, dadurch gekennzeichnet. daß die funktionellen Gruppen der Trennsubstanz Silanol-. Carbinol-, Alkoxysilan-, Säure-. Amino-. Epoxygruppen, Wasserstoff. Silan-, Keten- oder Isocyanatgruppen sind.

4. Polymerzusammensetzung nach Anspruch 1, dadurch gekennzeichnet, daß die Reaktion durch Kondensation von Silanolgruppen mit Hilfe von Wasser und einem Silanolkondensationskatalysator erreicht worden ist.

5. Polymerzusammensetzung nach Anspruch 4, dadurch gekennzeichnet, daß das Polyolefin ein Co- oder Terpolymer von Ethylenalkoxysilan und die Trennsubstanz ein Silikon ist, das Silanolgruppen enthält.

6. Polymerzusammensetzung nach Anspruch 4, dadurch gekennzeichnet, daß das Polyolefin ein Co- oder Terpolymer von Ethylenhydroxyalkyl(meth)acrylat ist und die Trennsubstanz Ketengruppen enthält.

7. Trennfolie für den Kontakt mit Oberflächen, die selbstklebende Klebstoffe enthalten, dadurch gekennzeichnet, daß sie eine Polymerzusammensetzung nach einem der Ansprüche 1 bis 6 in Form einer Folie enthält.

8. Trennfolie nach Anspruch 7, dadurch gekennzeichnet, daß sie ein Gemisch aus der Polymerzusammensetzung und einem nichtmodifizierten Polyolefin aufweist.

9. Trennfolie nach Anspruch 7, dadurch gekennzeichnet. daß sie eine Polymerzusammensetzung nach einem der Ansprüche 1 bis 6 aufweist, die auf der Oberfläche eines Folienmaterials, das die Polymerzusammensetzung nicht enthält, koextrudiert wird.

## Revendications

1. Composition polymère pour former des pellicules favorisant le détachement pour un contact avec des surfaces contenant des adhésifs autocollants, caractérisée en ce qu'elle est formée d'une polyoléfine, à laquelle des composés contenant des groupes fonctionnels ont été joints par copolymérisation, ou greffage d'une autre façon qu'au moyen desdits groupes fonctionnels, lesdits groupes fonctionnels étant des groupes acides ou anhydride d'acide, silanes, hydroxy, époxy, amino, cétènes ou isocyanates, et d'une substance réactive favorisant le détachement qui est une silicone, un composé acide gras ou un fluoropolymère contenant des groupes fonctionnels, ces polyoléfine et substance favorisant le détachement ayant été combinées à l'état fondu.

2. Composition polymère selon la revendication 1, caractérisée en ce que ladite polyoléfine est un copolymère ou un polymère greffé de l'éthylène.

3. Composition polymère selon la revendication 1, caractérisée en ce que les groupes fonctionnels de la substance favorisant le détachement sont des groupes silanols, carbinols, alcoxysilanes, acides, amino, époxy, hydrogènes, silanes, cétènes ou isocyanates.

4. Composition polymère selon la revendication 1, caractérisée en ce que la réaction est effectuée par condensation de groupes silanols au moyen d'eau et d'un catalyseur de condensation de silanols.

5. Composition polymère selon la revendication 4, caractérisée en ce que la polyoléfine est un co- ou terpolymère d'éthylènealcoxysilane et en ce que la substance favorisant le détachement est une silicone contenant des groupes silanols.

6. Composition polymère selon la revendication 4, caractérisée en ce que la polyoléfine est un co- ou terpolymère de (méth)acrylate d'éthylène-hydroxyalkyle, et en ce que la substance favorisant le détachement est une substance favorisant le détachement contenant des groupes cétènes.

7. Pellicule favorisant le détachement pour un contact avec des surfaces contenant des adhésifs autocollants, caractérisée en ce qu'elle contient une composition polymère selon l'une des revendications 1-6 sous la forme d'une pellicule.

8. Pellicule favorisant le détachement selon la revendication 7, caractérisé en ce qu'elle comprend un mélange de ladite composition polymère et d'une polyoléfine non modifiée.

9. Pellicule favorisant le détachement selon la revendication 7, caractérisé en ce qu'elle comprend une composition polymère selon l'une des revendications 1-6 coextrudée sur la surface d'un matériau en forme de pellicule ne contenant pas ladite composition polymère.
